# EUROPEAN PATENT SPECIFICATION

(11) **EP 3 713 407 B1**
(45) Date of publication and mention of the grant of the patent: **11.05.2022**
(21) Application number: 18803705.5
(22) Date of filing: 22.11.2018
(51) Int. Cl.: A01K 79/00, A01K 79/02, A01K 75/02

(54) **IMPROVED UNDERWATER HARVESTING SYSTEM**
VERBESSERTES UNTERWASSERERNTESYSTEM
SYSTÈME DE RÉCOLTE SOUS-MARIN AMÉLIORÉ

(30) Priority: 22.11.2017 NO 20171870; 22.01.2018 EP 18152728; 14.05.2018 EP 18172075
(43) Date of publication of application: 30.09.2020
(73) Proprietor: Norwegian Innovation Technology Group AS, 5236 Rådal (NO)
(72) Inventor: TOFTEN, Richard Johan, 5232 Paradis (NO); MORANA, Hans Christian, 4370 Egersund (NO); KOBBELTVEDT, Rolf, 5244 Fana (NO)
(74) Representative: Plougmann Vingtoft a/s
(86) International application number: PCT/EP2018/082154
(87) International publication number: WO 2019/101830

(56) References cited:
- WO-A1-2016/096832
- JP-A- 2004 049 053
- SU-A1- 490 450

## Description

### FIELD OF THE INVENTION

The present invention relates to a harvesting system for harvesting zooplankton or mesopelagic fishes.

### BACKGROUND OF THE INVENTION

Traditional mass catching, such as trawling, resulted in irreversible damage to aquatic habitats and ecosystem.

Catching of zooplankton or mesopelagic fishes using small mesh-size net-based methods has shown the drawback of unintentional bycatch of several other species producing severe consequences on marine life. JP 2004 049053 and WO 2016/096832 disclose examples of known harvesting system for harvesting zooplankton.

Hence, an improved harvesting system for catching zooplankton or mesopelagic fishes would be advantageous, and in particular a more efficient and reliable harvesting system that reduces bycatch would be advantageous.

### OBJECT OF THE INVENTION

It is an object of the present invention to wholly or partly overcome the above disadvantages and drawbacks of the prior art. More specifically, it is an object of the invention to provide a harvesting system for controlling and selectively catching specific marine species.

### SUMMARY OF THE INVENTION

Thus, the above described object and several other objects are intended to be obtained by the invention defined in claim 1 which discloses a harvesting system for harvesting zooplankton or mesopelagic fishes, comprising:
- an underwater device for being lowered and towed into the sea, said underwater device comprising a housing provided with one or more inlets adapted to receive a zooplankton or mesopelagic fishes-containing fluid, wherein said housing comprises one or more manifolds; said underwater device further comprising one or more sources of light facilitating schooling of zooplankton towards an illuminated area.

The idea of the invention is to provide an environmental friendly harvesting zooplankton or mesopelagic fishes that will avoid the need of midwater trawling and thus the use of fishing nets.

The invention achieves this result by schooling the species of interests through the use of one or more sources of light, thus concentrating zooplankton or mesopelagic fishes within a desired area, such as a water area from which they can be harvested.

The use of one or more sources of light thus defines an illuminated area in which zooplankton or mesopelagic fishes are schooled and assembled in a virtual net produced by the illumination.

The underwater device, when towed, may be also referred to as an underwater vehicle.

The harvesting system further comprises a fluidic connection fluidically connecting the underwater device to a surface vessel.

The zooplankton or mesopelagic fishes-containing fluid enters the housing of the underwater device to be moved towards and to the surface via a fluidic connection.

The fluidic connection may be a flexible hose mounted on the underwater device and in fluid communication, i.e. fluid can be moved along such as connection, with the one or more inlets. The hose may be adapted to secure and fluidly connect the underwater device to the surface vessel or to the shore.

The harvesting system further comprises pumping means for moving the zooplankton or mesopelagic fishes-containing fluid through the one or more inlets towards and to the surface vessel.

The one or more sources of light are located within the one or more inlets.

The great advantage of having the one or more sources of light located within, thus inside, the one or more inlets is that in this way the one or more sources of light produces an illumination path crossing the fluid direction originated by the suction force of the pumping means, thus leading to a more efficient harvesting of the zooplankton or mesopelagic fishes.

Zooplankton or mesopelagic fishes are directed towards the light, thus entering the one or more inlets and due to the suction of the pumping means will not be able to swim back out of the one or more inlets. Zooplankton or mesopelagic fishes are thus harvested more efficiently due to the presence of the one or more sources of light within, such as inside, the one or more inlets.

The one or more sources of light located within the one or more inlets may thus be located inside the one or more inlets at a predetermined distance from the opening of the one or more inlets.

This predetermined distance from the opening of the one or more inlets may be beyond the point of no return for the zooplankton or mesopelagic fishes.

The point of no return is a point defined by the pumping means as the point from which the zooplankton or mesopelagic fishes will not be able to swim back out of the inlet due to the suction action of the pumping means.

The one or more inlets may be configured to enhance and/or optimize light emission from the one or more sources of light.

The one or more inlets may have different shapes optimizing light emission and allowing for optimal flow of the zooplankton or mesopelagic fishes-containing fluid towards the surface vessel or on shore.

The one or more inlets may be characterized by a cone shaped inlet funnel providing a gradual increase of the flow towards the minimum diameter of the inlet.

By using the cone shaped inlet funnel, the suction force of the pumping means can be felt further away from the inlet opening and ramps smoothly to maximum speed at the neck of the funnel.

The one or more inlets may be characterized by a cone shaped inlet funnel having a further side aperture within the wide opening surface or area of the funnel, the further side aperture adapted to accommodate the one or more sources of light. When in use, the one or more sources of light will thus point towards a specific water area in which zooplankton or mesopelagic fishes will be schooled and therefore assembled for more efficient harvesting.

In this configuration, the one or more sources of light produce an illumination path crossing the fluid direction originated by the suction force of the pumping means, thus leading to a more efficient harvesting of the zooplankton or mesopelagic fishes.

In some other embodiments, the one or more inlets may be characterized by a bell shape inlet funnel.

In some embodiments, the internal surface of the one or more inlets is treated, such as coated or surface treated for enhancing light emission from the one or more sources of light.

In some embodiments, the one or more sources of light are Light Emitting Diodes (LEDs). The LEDs may be fastened, such as glued, to the one of more inlets.

The LEDs may be fastened, such as glued, to a LED housing. The housing comprising the LED may then be fastened, such as glued, to the one or more inlets. The housing may provide cooling to the LED.

The one or more sources of light may be a light emitting diode fasten, for example by using a thermal glue to its housing and in turn to the one or more inlets so as to emit light in the inlet area.

The housing containing the LED may be sealed, such as water proof sealed, thereby avoiding contact between the LED and the surrounding water during use.

The LED housing may contain more than one LED. For example, combination of different LEDs emitting at different and/or complementary predefined wavelengths may be used to achieve the desired light emission within the desired Ultra violet (UV)/Visible (Vis)/Near infra red (NIR) range, i.e. between 200 nm and 1100 nm.

In some embodiments, the LED housing may contain one or more LEDs that allow for emission colouration changes. The one or more LEDs emission may be tuned so as to select the desired emission wavelength or the desired emission spectra.

LEDs and their housings may be replaced so as to maintenance or so as to harvest different species that may be sensitive to other specific wavelengths.

LEDs emission may be tune by a controller located on shore or on the surface vessel.

In some embodiments, the one or more sources of light are within a predetermined distance from the opening of the one or more inlets.

The one or more sources of light may be located within a predetermined distance from the opening of the one or more inlets, e.g. beyond the point of no return for the zooplankton or mesopelagic fishes.

The point of no return is a point defined by the pumping means as the point from which the zooplankton or mesopelagic fishes will not be able to swim back out of the inlet due to the suction of the pumping means.

In some further embodiments, the one or more inlets comprise filtering means for selecting size of zooplankton or mesopelagic fishes entering the one or more inlets.

Filtering means may be a grid, a mesh, a net or a woven wire having regular intervals determining the size of the zooplankton or mesopelagic fishes that will be entering the housing of the underwater device.

Filtering means for selecting size of zooplankton or mesopelagic fishes, such as a grid, may be added at the larger end of the inlet, such as a cone shaped inlet funnel.

This has the advantage of having the filtering means at a distance from the maximal suction force, thus making larger objects less susceptible to block the inlet and the fluidic connection.

This distance from the minimum diameter to the edge of the cone shaped inlet funnel may be between 20 and 60 mm, such as 40 mm. This distance may be tuned so as to further counteract debris being stuck in front of the inlet.

In some embodiments, the one or more sources of light emit at a predefined wavelength, such as between 200 and 1100 nm, for example between 400-and 800 nm, such as between at 470 and 490 nm.

Other predefined wavelengths can be used so as to selectively address different species.

In some embodiments, white light, i.e. having an emission spectrum in the visible region, i.e. between 400 and 800 nm, may be used as a source of light.

In some embodiments, the underwater device further comprises one or more sources of light located on the external surface of the underwater device for schooling zooplankton or mesopelagic fishes onto a defined illuminated water area at a distance from the underwater device.

In some embodiments, the harvesting system further comprises means for acoustic identification of zooplankton or mesopelagic fishes.

For example, the harvesting system may comprise one or more sonars for better identification of the species of interest.

In some further embodiments, the harvesting system further comprises means for visual identification of zooplankton or mesopelagic fishes.

For example, the harvesting system may comprise one or more cameras for better identification of the species of interest.

The one or more cameras may be a pan and tilt camera or a wide angle camera located to the front or underneath the underwater device.

Means for acoustic and visual identification of zooplankton or mesopelagic fishes may be located onto the underwater device or along the fluidic connection.

The housing of the underwater device comprises one or more manifolds, wherein the one or more inlets are inlets to the one or more manifolds and the one or more manifolds converge into the fluidic connection.

The core of the underwater device is a branched manifold.

For example, the housing may comprise three manifolds coupling with each other through camlock connections.

In some embodiments, the one or more manifolds have a trident shape, i.e. three parallel manifolds connected together in a three-fork or trident shape.

The one or more inlets are located onto the one or more manifolds.

For example, in the trident shape manifolds, the central pipe may comprise three inlets while the two side pipes may comprise two inlets each, for a total of seven inlets.

The trident shaped manifolds have shown to be the optimal shape for an efficient suction of the zooplankton or mesopelagic fishes-containing fluid.

The ratio between the sizes of the different sections of the manifolds may be optimized so as to achieve optimal speed of fluid through the different sections of the underwater device.

In some embodiments, the one or more inlets may have a diameter between 10 and 100 mm, such as between 25 and 85 mm, for example 28 or 46 mm. Depending on the pumping means capacity and the number of the one or more inlets, the inlet diameter may vary outside the mentioned range.

In some embodiments, the harvesting system further comprises one or more buoyancy adjustment elements.

The underwater device operates in a preferred horizontal position. The one or more buoyancy adjustment elements may be used to render the underwater device neutrally buoyant.

In some other embodiments, the underwater device comprises the one or more buoyancy adjustment elements for controlling the buoyancy of the underwater device.

The one or more buoyancy adjustment elements may be located onto an external surface of the underwater device.

In some embodiments, the one or more buoyancy adjustment elements may be located and fastened to an internal surface of the underwater device.

The one or more buoyancy adjustment elements may be removable elements.

The one or more buoyancy adjustment elements may be interchangeable and thus detachable from the underwater device.

The one or more buoyancy adjustment elements may be floats.

Example of buoyancy adjustment elements may comprise ethylene vinyl acetate or ethylene vinyl acetate based materials having high buoyancy.

In some embodiments, the one or more buoyancy adjustment elements are connected, such as mechanically connected, to the underwater device and located at a predefined distance from the underwater device.

The mechanical connection between the underwater device and the one or more buoyancy elements may be achieved via the fluidic connection.

In some embodiments, buoyancy adjustment elements may be located on the surface of the underwater device and also at a predefined distance from the underwater device.

The predefined distance is a distance determined by the need of keeping the underwater device and the fluidic connection buoyant so as to keep the underwater device in a predetermined and horizontal position during use. Therefore, the presence of a float on the fluidic connection compensates for the negative buoyancy of the fluidic connection in itself. The lack of a float on the fluidic connection may unbalance the horizontal harvesting position of the underwater device.

According to the invention, the pumping means are located onto a protecting frame surrounding the underwater device.

In some other embodiments, the pumping means are located at a predetermined distance from the underwater device.

For example, the pumping means may be one or of more pumps moving the zooplankton or mesopelagic fishes-containing fluid by mechanical action.

The one or of more pumps may be centrifugal pumps.

The one or of more pumps may be subsea pumps, thereby operating under the surface of the sea.

In non-claimed examples, the pumping means are located onto said surface vessel.

In some embodiments, the pumping means comprises a subsea pump and a further pump located onto the surface vessel or on shore.

In non-claimed examples, the pumping means may be located on shore.

The pumping means are fastened to the fluidic connection.

In some further embodiments, the pumping means comprise sound damping elements, thereby damping the sounds produced by the pumping process that may distract the zooplankton or the mesopelagic fishes.

In some embodiments, the harvesting system further comprises an umbilical cable or umbilical for suppling electric power and fibre optics to the underwater device.

In non-claimed examples, the pumping means are fastened to the umbilical cable. Umbilical cable and fluidic connection may be combined in a single construction. For example, the umbilical cable may be contained within the fluidic connection.

### BRIEF DESCRIPTION OF THE FIGURES

The harvesting system according to the invention will now be described in more detail with regard to the accompanying figures. The figures show one way of implementing the present invention and is not to be construed as being limiting to other possible embodiments falling within the scope of the attached claim set.
Figure 1A, 1B, 1C, 1D and 1E are schematic representations of the harvesting system according to some embodiments of the invention.
Figures 2A, 2B are a side and a front view of an underwater device according to some embodiments of the invention.
Figure 2C is a perspective view of an underwater device according to some embodiments of the invention.
Figure 3 is an exploded view of an underwater device according to some embodiments of the invention.
Figures 4, 5A and 5B show a manifold of an underwater device according to some embodiments of the invention.
Figures 6A and 6B show inlets of an underwater device according to some embodiments of the invention.
Figures 7, 8A and 8B show inlets comprising a source of light of an underwater device according to some embodiments of the invention.
Figures 9A and 9B are a schematic side view and perspective view of a subsea pump according to some embodiments of the invention.
Figure 10 shows pumping means for pumping zooplankton or mesopelagic fishes according to some non-claimed examples.
Figure 11A shows a schematic representation of the harvesting system in which the pumping means are located onto a structure protecting and surrounding the underwater device.
Figure 11B shows a schematic representation of the harvesting system in which the pumping means are located onto a structure protecting and surrounding the underwater device from a point of view located above the harvesting system.
Figure 11C shows a schematic representation of the harvesting system in which the pumping means are located onto a structure protecting and surrounding the underwater device from a point of view located below the harvesting system.
Figure 12A is a cross section of an underwater device according to some embodiments of the invention.
Figure 12B is a bottom view of an underwater device according to some embodiments of the invention.
Figure 13 is a flow-chart of a method according to a non-claimed example.

### DETAILED DESCRIPTION OF AN EMBODIMENT

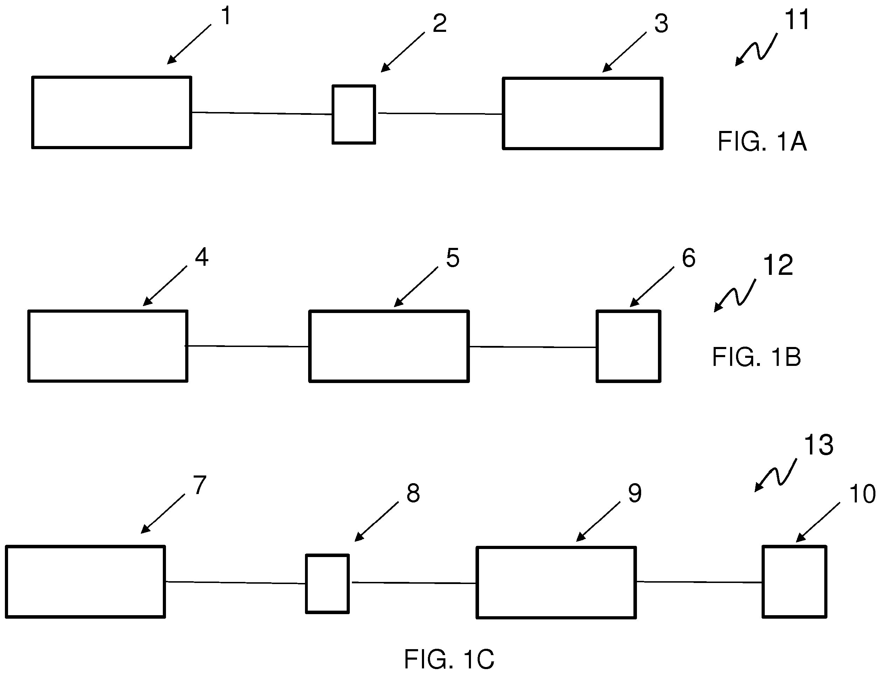

Figure 1A shows the harvesting system 11 in which the underwater device 1 is connected to a subsea pump 2 and to the means 3 to deploy the underwater device and subsea pump.

Figure 1B shows the harvesting system 12 in a non-claimed configuration in which the underwater device 4 is connected to means 5 to deploy the underwater device while the pumping means 6 are located on shore or on a surface vessel.

According to the non-claimed example shown in figure 1C, the harvesting system 13 may also have a configuration in which the underwater device 7 is connected to a subsea pump 8 and to the means 9 to deploy the underwater device and the subsea pump, which is further connected to the pumping means 10 located on shore or on a surface vessel so as to optimize zooplankton or mesopelagic fishes harvesting procedures.

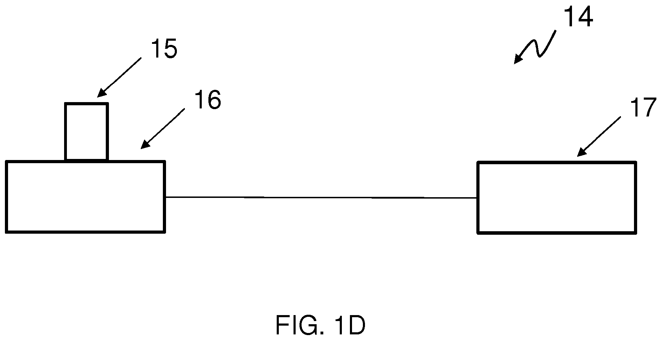

Figure 1D shows the harvesting system 14 in which the pumping means, i.e. the the subsea pump 15 is located onto the underwater device 16. The means 17 for deploying the underwater device are shown connected to the underwater device 16. The pumping means are located onto a protecting frame surrounding the underwater device.

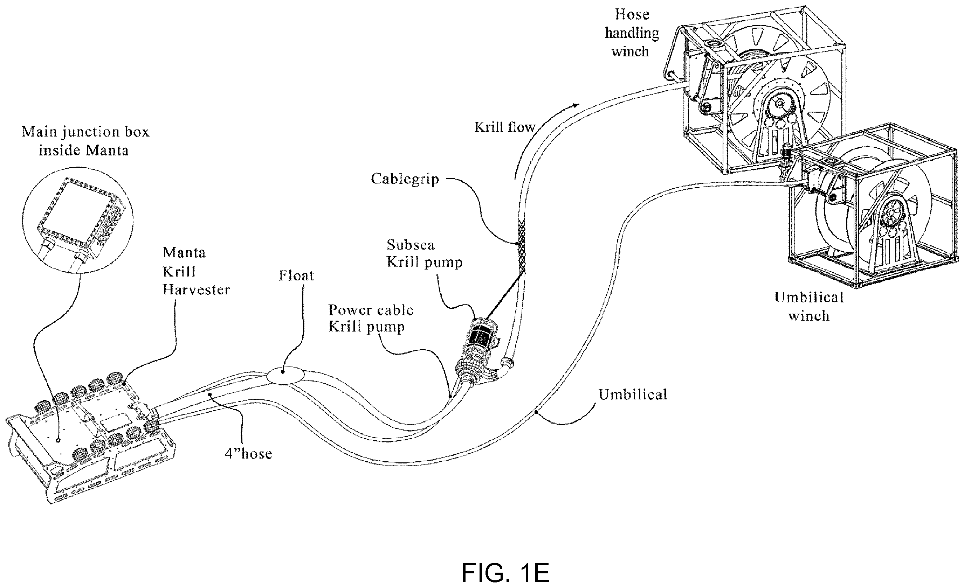

In some embodiments, the means 17 for deploying the underwater device may also be connected to the underwater device via the subsea pump 15.Figure 1E shows a schematic representation of the harvesting system comprising the underwater device connected with a flexible hose to a surface vessel. The flexible hose is deployed through the use of a winch located on the surface vessel. A float is connected to the hose, ensuring correct positioning of the underwater device during use.

A subsea pump is used for pumping zooplankton or mesopelagic fishes to the surface vessel. The subsea pump is fastened to the hose by a cable grip. Electrical power is provided to the underwater device via an umbilical, deployed via an umbilical winch. The subsea pump is powered by the umbilical via a cable originating from the underwater device. In some other embodiments, the subsea pump may be powered directly via the umbilical cable.

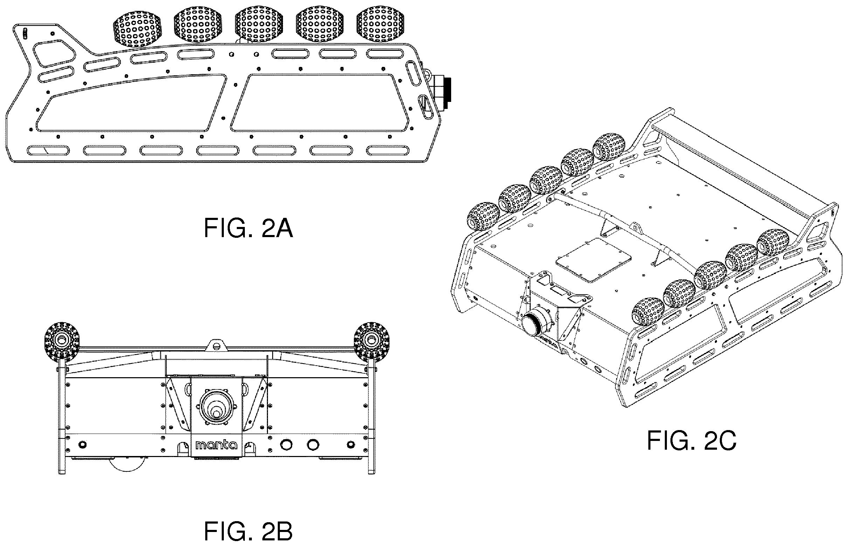

Figures 2A, 2B and 2C show an underwater device showing the outlet to the hose and buoyancy elements located onto an external surface of the underwater device.

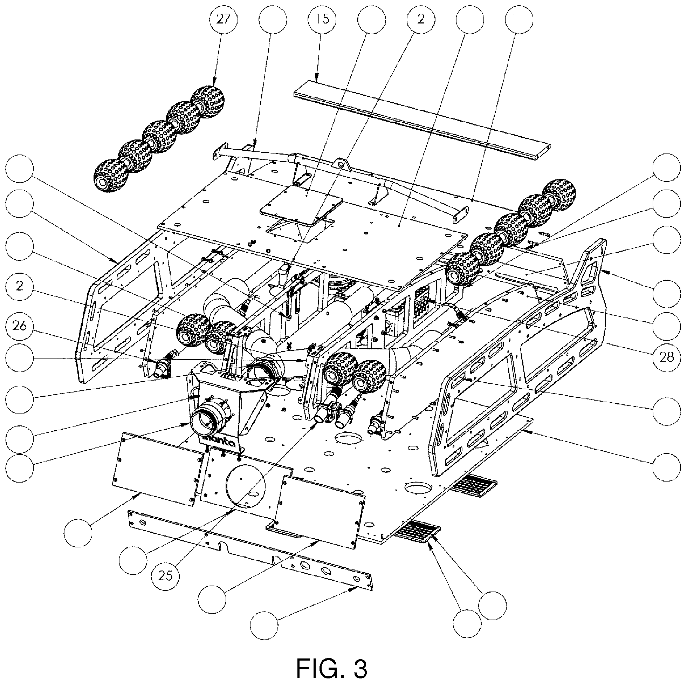

Figure 3 is an exploded view of an underwater device showing manifolds (2), manifolds with LED, floats (27), a junction box (28), an external camera (25), an external schooling LED (26), a rear wing (15) and several plates constituting the external surface of the underwater device.

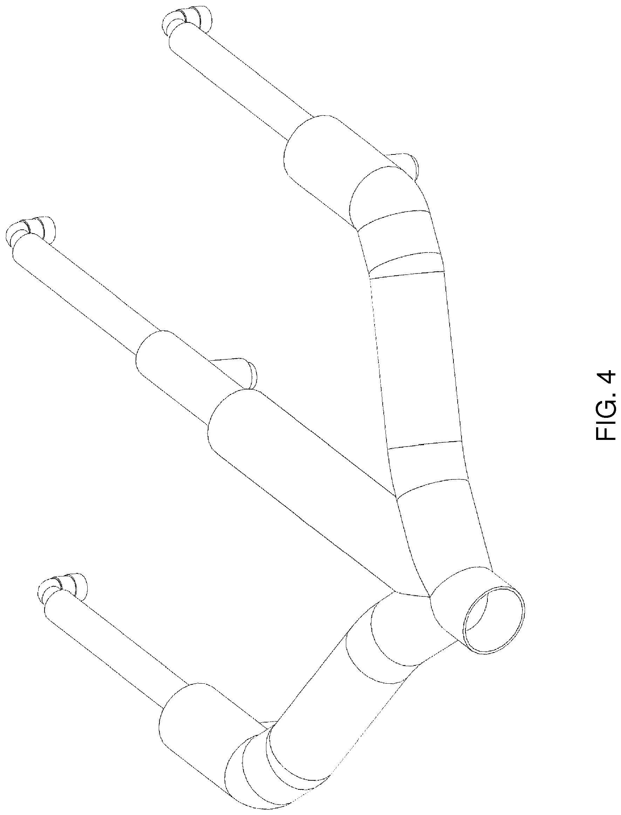

Figures 4 shows a trident-shaped manifold of an underwater device according to some embodiments of the invention.

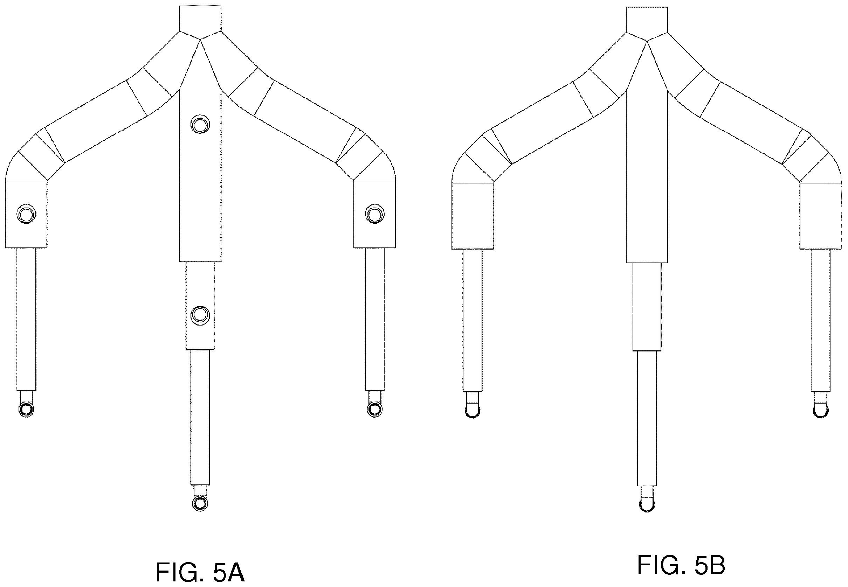

Figures 5A and 5B show the location of the inlets to trident-shaped manifold of an underwater device according to some embodiments of the invention.

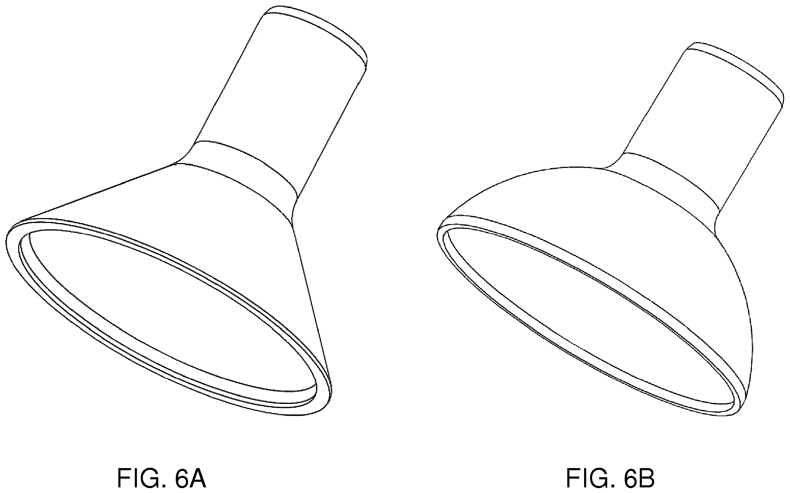

Figures 6A and 6B show a cone shaped inlet funnel and a bell shape inlet funnel respectively.

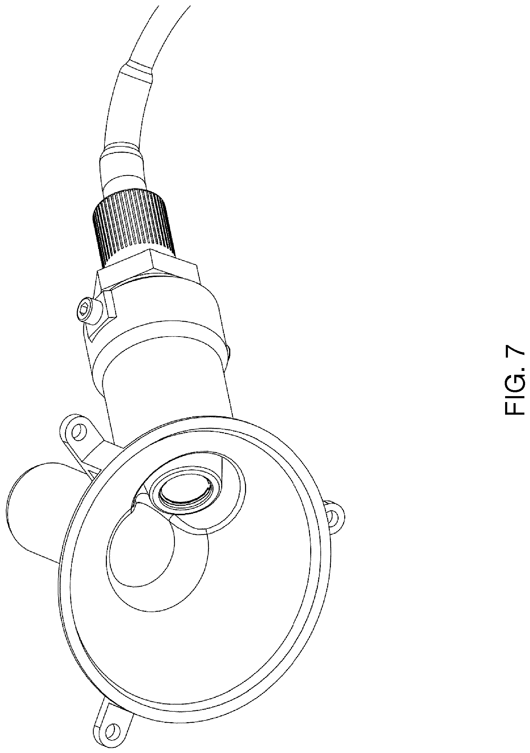

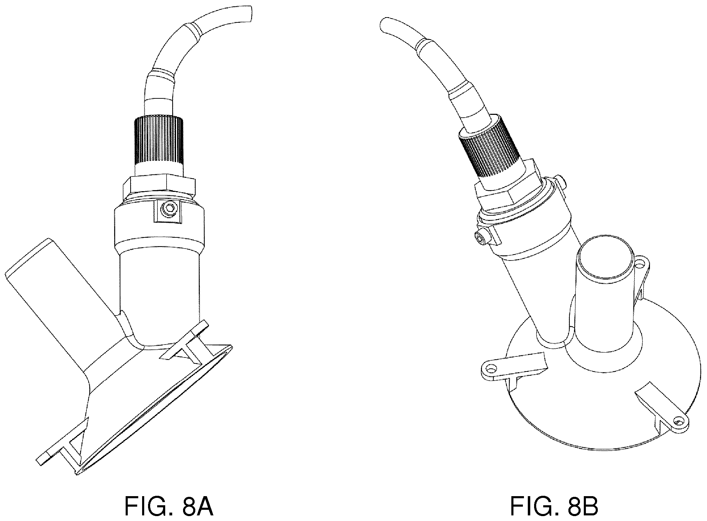

Figures 7, 8A and 8B show an inlet comprising a source of light of an underwater device wherein the source of light is located on a side aperture within the wide opening surface or area of the inlet funnel.

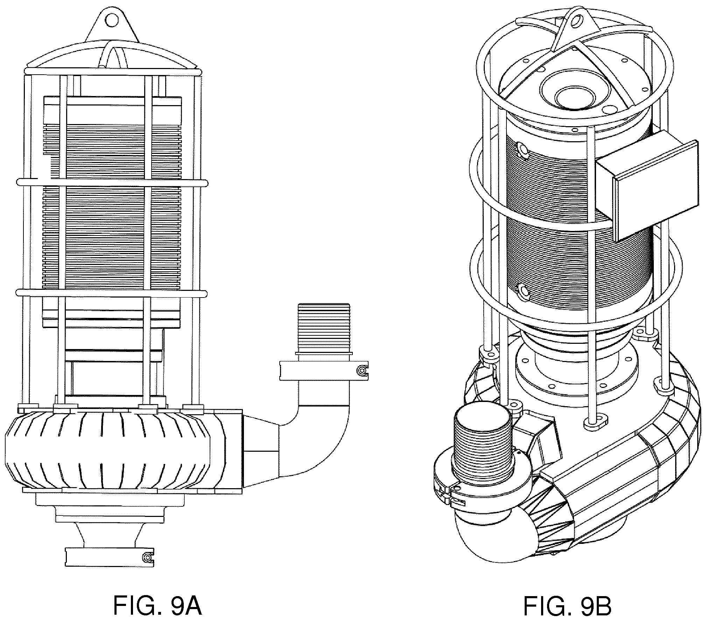

Figures 9A and 9B are a schematic side view and perspective view of a subsea pump according to some embodiments of the invention.

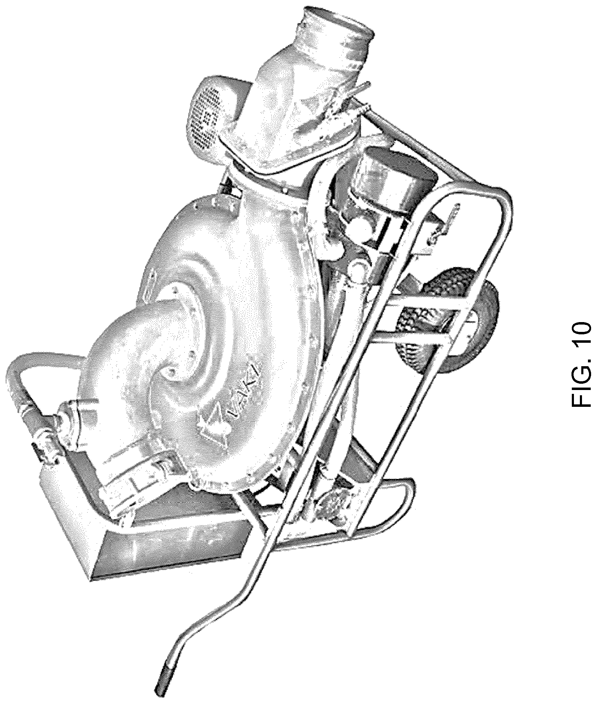

Figure 10 shows a surface pump that can be used as pumping means for pumping zooplankton or mesopelagic fishes according to non-claimed examples.

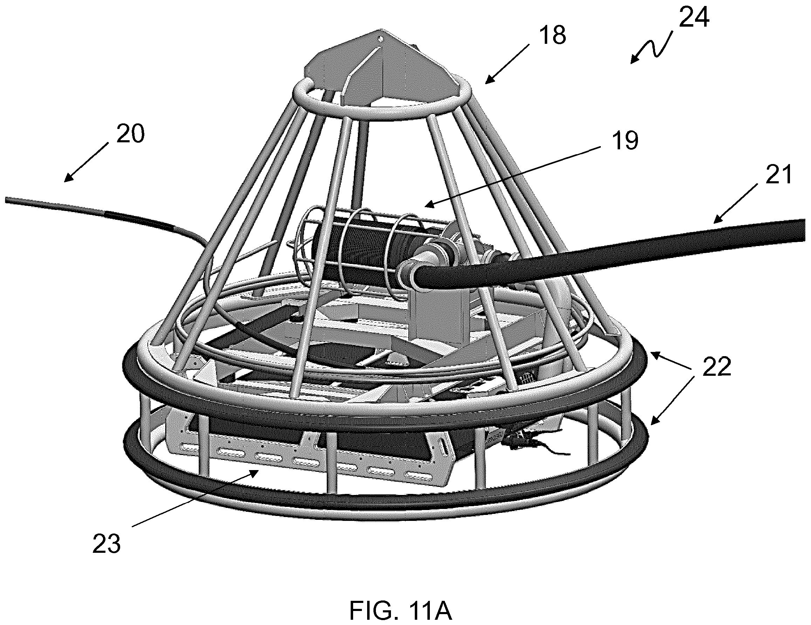

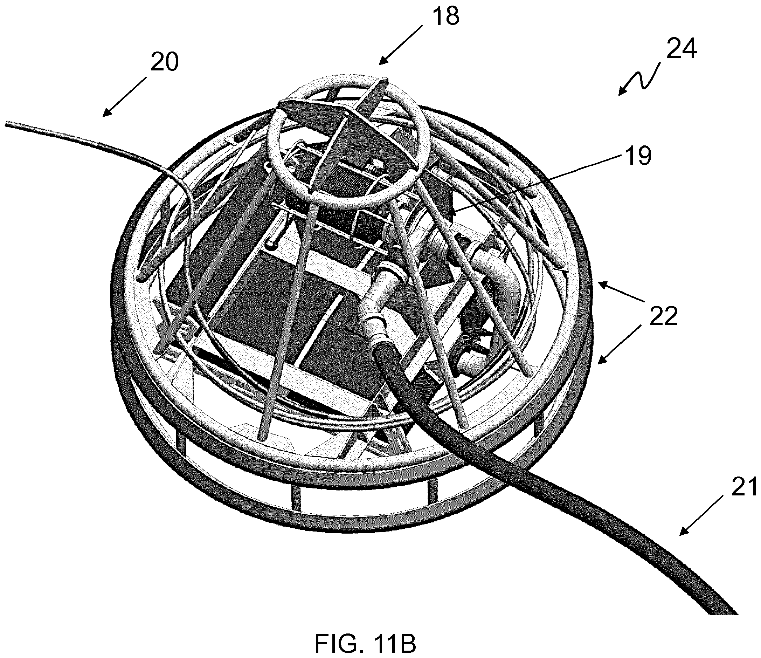

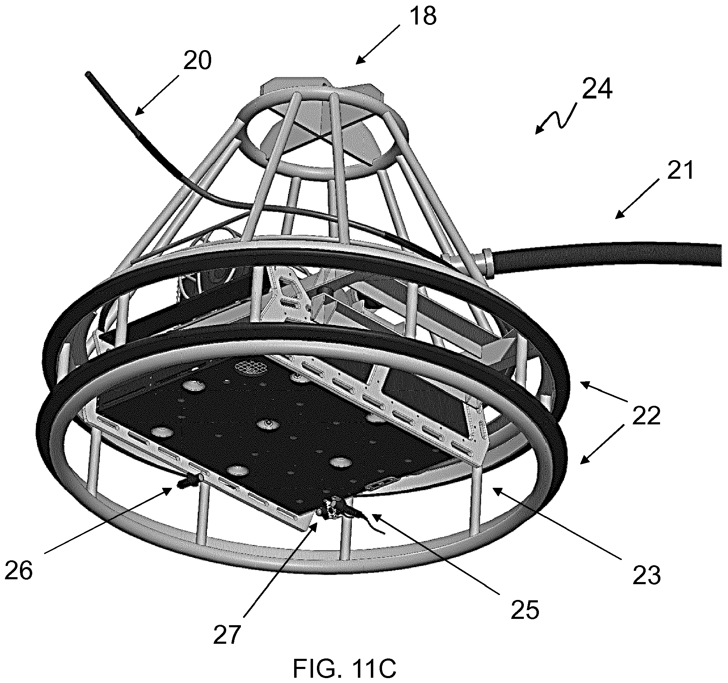

Figures 11A, 11B and 11C show a schematic representation of the harvesting system in which the pumping means are located onto a structure protecting and surrounding the underwater device.

Figure 11A, 11B and 11C show a schematic representation of the harvesting system 24 in which the pumping means, i.e. a subsea pump 19, are located onto a structure 18 protecting and surrounding the underwater device 23.

The structure 18 is a cage type frame or cage structure having functional features allowing better buoyancy and protection of the underwater device 23. For example, the harvesting system 24 may have extra buoyancy adjustment elements attached to the cage structure 18 or to the underwater harvesting system 24 to render the underwater device 23, the cage 18 and the pumping means 19 neutrally buoyant.

In general, the presence of a cage structure 18, on which the pumping means are located, allows for better protection and handling of the harvesting system 24 and has the advantage of providing the buoyancy adjustment needed to operate the underwater device 23 in a preferred horizontal position. Position sensors may be located onto the cage structure 18 so as to monitor the position of the underwater device 23.

The harvesting system 24, may comprise, as shown in figures 11A, 11B and 11C, elements absorbing the impact in a minor collision, such as shock absorbers, bumpers or cushions 22.

The shock absorbers 22 may be located onto circular structures being part of the cage structure 18, surrounding the underwater device 23.

In some embodiments, the shock absorbers 22 may be buoyancy adjustment elements, such as floats.

In some embodiments, sound and vibration damping elements, such as rubber elements, may be located around the pumping means 19, thereby damping the sounds and the vibrations produced by the pumping process that may distract the zooplankton or the mesopelagic fishes.

The harvesting system 24 comprising the cage structure 18 of figure 11A, 11B and 11C shows also the presence of the umbilical cable or umbilical 20 for suppling electric power and fibre optics to the underwater device.

The umbilical may be conveniently coiled around the circular structures of the case 18.

In figures 11A, 11B and 11C, the presence of the fluidic connection or flexible hose 21 is shown.

Conveniently, flexible hose 21 and umbilical 20 may be located at opposite sides of the cage structure 18 so as to avoid potential entanglement and eventually contributing to achieve neutral buoyancy.

The cage structure 18 including the underwater device 23 may be deployed through the use of a further connection or rope operated by a separate winch. In that, the cage structure 18 may have appropriate fastening means for fixing a further connection or rope for deployment.

The underwater device 23, as shown in figure 11C may be further equipped with further sources of light located underneath the inlet openings, such as source of light 27 illuminating the area underneath the underwater device 23.

Cameras 25 and 26 may be located also in the area underneath the underwater device 23 so as to allow for inspection of the harvesting process.

The opening inlets, as shown in figure 11C, may have no filtering means, i.e. no grids to avoid potential clogging at the inlets.

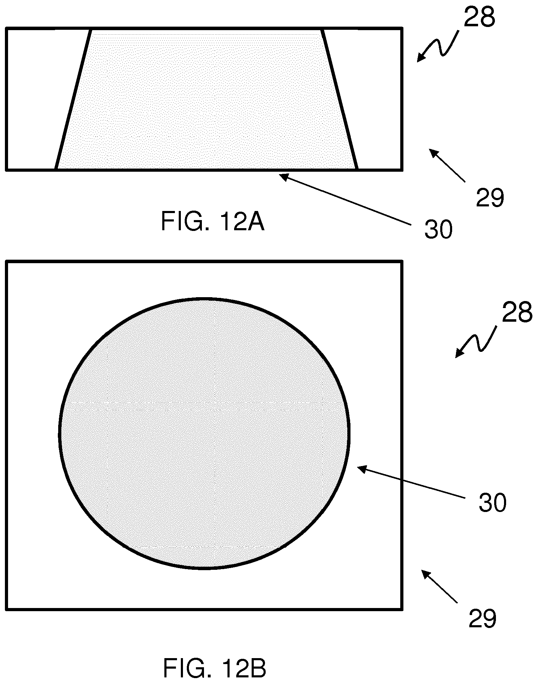

Figures 12A and 12B are a cross section and a bottom view respectively of an underwater device according to some other embodiments of the invention.

Figures 12A and 12B show an harvesting system 28 in which the underwater device 29 is characterized by the presence of a single wide opening inlet 30 covering a large area of the bottom surface of the underwater device 29.

The opening inlet 30 may have a conical shape, thus reducing the opening size towards the manifold. The opening 30 may comprise a single or a series of sources of light located around the opening and/or within the opening.

The opening inlet 30 having conical shape may be coated with or produced using materials that are highly light reflective in the visible range or within the wavelength range of interest for attracting the correspondent zooplankton or mesopelagic fishes.

In that, the opening inlet 30 may comprise one or more sources of light, such as circular sources of light, such as blue lights, illuminating the area surrounding the inlet and/or the area within the inlet thereby directing the zooplankton or mesopelagic fishes within the inlet towards the manifold.

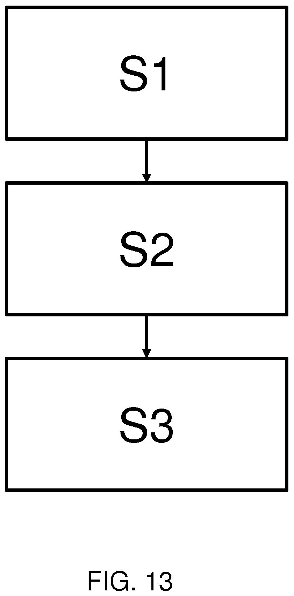

Figure 13 is a flow-chart of a method according to a non-claimed example.

The method of harvesting zooplankton or mesopelagic fishes comprises the steps of:
- (S1) lowering the underwater device into the sea;
- (S2) schooling zooplankton mesopelagic fishes towards an illuminated area;
- (S3) pumping the zooplankton or mesopelagic fishes-containing fluid to the surface vessel or on shore.

Once lowered, the underwater device may be moved towards and to the identified area of interest. The underwater device may be moved by further lowering the device into a deeper harvesting area of interest or by towing the device in a different area of interest.

The specific light emission used for schooling can be tuned so as to school a different species or to improve schooling.

The identification of the species to be harvested may occur by acoustic or visual inspection of the area surrounding the underwater device.

Acoustic inspection may be achieved via sonar or echo sounder devices. Identification and inspection of the zooplankton or mesopelagic fishes can be also achieved by pumping small sample to the surface vessel or on shore.

Potential control of bycatch can also be achieved by the use of visual inspection, pumping small samples or by using filtering means for selecting size of zooplankton or mesopelagic fishes entering the one or more inlets, such as mesh or net a woven wire having regular intervals.

Once on the surface vessel or on shore the zooplankton or mesopelagic fishes-containing fluid is processed.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A harvesting system (11, 12, 13, 14, 24) for harvesting zooplankton or mesopelagic fishes, comprising:
- an underwater device 2. (1, 4, 16, 23, 29) configured to be lowered and towed into the sea, said underwater device comprising a housing provided with one or more inlets adapted to receive fluid containing zooplankton or mesopelagic fishes wherein said housing comprises one or more manifolds (2);
said underwater device further comprising one or more sources of light (27) configured to school the zooplankton towards an illuminated area;
- a fluidic connection (21) fluidically connecting said underwater device to a surface vessel; wherein said one or more inlets are inlets to said one or more manifolds and said one or more manifolds converge into said fluidic connection, and wherein said one or more sources of light are located within said one or more inlets; and
- pumping means (6, 10, 19) configured to move said fluid containing said zooplankton or mesopelagic fishes through said one or more inlets towards said surface vessel;
said harvesting system being **characterised in that** it further comprises a protecting frame (18) surrounding said underwater device; wherein said pumping means are located onto said protecting frame surrounding said underwater device.

2. A harvesting system according to claim 1, wherein said protecting frame surrounding said underwater device is a cage type frame.

3. A harvesting system according to any of the preceding claims, wherein said one or more sources of light are LED, said one or more sources of light being fastened to said one of more inlets.

4. A harvesting system according to any of the preceding claims, wherein said one or more sources of light are within a predetermined distance from an opening of said one or more inlets.

5. A harvesting system according to any of the preceding claims, wherein said one or more inlets comprises filtering means for selecting size of zooplankton or mesopelagic fishes entering said one or more inlets.

6. A harvesting system according to any of the preceding claims, wherein said one or more sources of light emit at a predefined wavelength, such as between 400-550 nm, such as at 470 nm.

7. A harvesting system according to any of the preceding claims, further comprising means for acoustic identification of zooplankton or mesopelagic fishes.

8. A harvesting system according to any of the preceding claims, further comprising means for visual identification of zooplankton or mesopelagic fishes.

9. A harvesting system according to any of the preceding claims, 2. wherein said underwater device further comprises one or more buoyancy adjustment elements for controlling the buoyancy of said underwater device.

10. A harvesting system according to claim 9, wherein said one or more buoyancy adjustment elements are located onto an external surface of said underwater device.

11. A harvesting system according to any of the preceding claims 9, wherein said one or more buoyancy adjustment elements are connected to said underwater device and located at a predefined distance from said underwater device.

12. A harvesting system according to any of the preceding claims 9-11, wherein said one or more buoyancy adjustment elements are attached to said protecting frame.

13. A harvesting system according to any of the preceding claims, wherein said pumping means are one or of more pumps moving said zooplankton or mesopelagic fishes-containing fluid by mechanical action.

14. A harvesting system according to claim 13, and wherein said one or of more pumps are subsea pumps.

15. A harvesting system according to claim 4 further comprising sources of light located underneath said opening of said one or more inlets, such as sources of light illuminating the area underneath the underwater device while in operation.

## Patentansprüche

1. Erntesystem (11, 12, 13, 14, 24) zum Ernten von Zooplankton oder mesopelagischen Fischen, umfassend:
- eine Unterwasservorrichtung (1, 4, 16, 23, 29), die so konfiguriert ist, dass sie abgesenkt und ins Meer geschleppt werden kann, wobei die Unterwasservorrichtung ein Gehäuse umfasst, das mit einem oder mehreren Einlässen versehen ist, die so angepasst sind, dass sie ein Fluid aufnehmen, das Zooplankton oder mesopelagische Fische enthält, wobei das Gehäuse einen oder mehrere Verteiler (2) umfasst; wobei die Unterwasservorrichtung weiter eine oder mehrere Lichtquellen (27) umfasst, die so konfiguriert sind, dass sie das Zooplankton zu einem beleuchteten Bereich schwärmen lassen;
- eine fluidische Verbindung (21), die die Unterwasservorrichtung mit einem Oberflächenschiff fluidisch verbindet; wobei der eine oder die mehreren Einlässe Einlässe zu dem einen oder den mehreren Verteilern sind und der eine oder die mehreren Verteiler in die fluidische Verbindung konvergieren und wobei die eine oder die mehreren Lichtquellen innerhalb des einen oder der mehreren Einlässe angeordnet sind; und
- Pumpmittel (6, 10, 19), die so konfiguriert sind, dass sie das Fluid, das das Zooplankton oder die mesopelagischen Fische enthält, durch den einen oder die mehreren Einlässe zu dem Oberflächenschiff bewegen;
wobei das Erntesystem **dadurch gekennzeichnet ist, dass** es weiter umfasst
- einen Schutzrahmen (18), der die Unterwasservorrichtung umgibt; wobei die Pumpmittel auf dem Schutzrahmen angeordnet sind, der die Unterwasservorrichtung umgibt.

2. Erntesystem nach Anspruch 1, wobei der Schutzrahmen, der die Unterwasservorrichtung umgibt, ein käfigartiger Rahmen ist.

3. Erntesystem nach einem der vorstehenden Ansprüche, wobei es sich bei der einen oder den mehreren Lichtquellen um LED handelt, wobei die eine oder die mehreren Lichtquellen an dem einen oder den mehreren Einlässen befestigt sind.

4. Erntesystem nach einem der vorstehenden Ansprüche, wobei sich die eine oder die mehreren Lichtquellen innerhalb eines vorbestimmten Abstands von einer Öffnung des einen oder der mehreren Einlässe befinden.

5. Erntesystem nach einem der vorstehenden Ansprüche, wobei der eine oder die mehreren Einlässe Filtermittel zur Auswahl der Größe des Zooplanktons oder der mesopelagischen Fische umfassen, die in den einen oder die mehreren Einlässe eintreten.

6. Erntesystem nach einem der vorstehenden Ansprüche, wobei die eine oder die mehreren Lichtquellen bei einer vordefinierten Wellenlänge emittieren, wie beispielsweise zwischen 400-550 nm, wie beispielsweise bei 470 nm.

7. Erntesystem nach einem der vorstehenden Ansprüche, das weiter Mittel zur akustischen Identifizierung von Zooplankton oder mesopelagischen Fischen umfasst.

8. Erntesystem nach einem der vorstehenden Ansprüche, das weiter Mittel zur visuellen Identifizierung von Zooplankton oder mesopelagischen Fischen umfasst.

9. Erntesystem nach einem der vorstehenden Ansprüche, wobei die Unterwasservorrichtung weiter ein oder mehrere Auftriebseinstellelemente zur Steuerung des Auftriebs der Unterwasservorrichtung umfasst.

10. Erntesystem nach Anspruch 9, wobei das eine oder die mehreren Auftriebseinstellelemente auf einer Außenfläche der Unterwasservorrichtung angeordnet sind.

11. Erntesystem nach einem der vorstehenden Ansprüche 9, wobei das eine oder die mehreren Auftriebseinstellelemente mit der Unterwasservorrichtung verbunden und in einem vordefinierten Abstand von der Unterwasservorrichtung angeordnet sind.

12. Erntesystem nach einem der vorstehenden Ansprüche 9-11, wobei das eine oder die mehreren Auftriebseinstellelemente an dem Schutzrahmen angebracht sind.

13. Erntesystem nach einem der vorstehenden Ansprüche, wobei es sich bei den Pumpmitteln um eine oder mehrere Pumpen handelt, die das Zooplankton oder mesopelagische Fische enthaltende Fluid durch mechanische Wirkung bewegen.

14. Erntesystem nach Anspruch 13, und wobei es sich bei der einen oder den mehreren Pumpen um Unterwasserpumpen handelt.

15. Erntesystem nach Anspruch 4, das weiter Lichtquellen umfasst, die unterhalb der Öffnung des einen oder der mehreren Einlässe angeordnet sind, wie beispielsweise Lichtquellen, die den Bereich unterhalb der Unterwasservorrichtung während des Betriebs beleuchten.

## Revendications

1. Système de récolte (11, 12, 13, 14, 24) destiné à récolter du zooplancton ou des poissons mésopélagiques, comprenant :
- un dispositif sous-marin (1, 4, 16, 23, 29) configuré pour être descendu et remorqué dans la mer, ledit dispositif sous-marin comprenant un châssis muni d'une ou de plusieurs entrées adaptées pour recevoir un fluide contenant du zooplancton ou des poissons mésopélagiques, ledit châssis comprenant un ou plusieurs collecteurs (2) ; ledit dispositif sous-marin comprenant en outre une ou plusieurs sources de lumière (27) configurées pour entraîner le zooplancton vers une zone éclairée ;
- un raccord fluidique (21) reliant en connexion fluidique ledit dispositif sous-marin à un navire de surface ; lesdites une ou plusieurs entrées étant des entrées vers lesdits un ou plusieurs collecteurs et lesdits un ou plusieurs collecteurs convergeant dans ledit raccord fluidique, et lesdites une ou plusieurs sources de lumière étant situées à l'intérieur desdites une ou plusieurs entrées ; et
- des moyens de pompage (6, 10, 19) configurés pour amener ledit fluide contenant ledit zooplancton ou lesdits poissons mésopélagiques à travers lesdites une ou plusieurs entrées vers ledit navire de surface ;
ledit système de récolte étant **caractérisé en ce qu'**il comprend en outre
- un cadre protecteur (18) entourant ledit dispositif sous-marin ; lesdits moyens de pompage étant situés sur ledit cadre protecteur entourant ledit dispositif sous-marin.

2. Système de récolte selon la revendication 1, dans lequel ledit cadre protecteur entourant ledit dispositif sous-marin est un cadre de type cage.

3. Système de récolte selon l'une quelconque des revendications précédentes, dans lequel lesdites une ou plusieurs sources de lumière sont des LED, lesdites une ou plusieurs sources de lumière étant fixées auxdites une ou plusieurs entrées.

4. Système de récolte selon l'une quelconque des revendications précédentes, dans lequel lesdites une ou plusieurs sources de lumière se trouvent dans les limites d'une distance préétablie depuis une ouverture desdites une ou plusieurs entrées.

5. Système de récolte selon l'une quelconque des revendications précédentes, dans lequel lesdites une ou plusieurs entrées comprennent des moyens de filtration destinés à sélectionner la taille du zooplancton ou des poissons mésopélagiques pénétrant dans lesdites une ou plusieurs entrées.

6. Système de récolte selon l'une quelconque des revendications précédentes, dans lequel lesdites une ou plusieurs sources de lumière émettent à une longueur d'onde prédéfinie, telle qu'entre 400 et 550 nm, telle qu'à 470 nm.

7. Système de récolte selon l'une quelconque des revendications précédentes, comprenant en outre des moyens pour l'identification acoustique de zooplancton ou de poissons mésopélagiques.

8. Système de récolte selon l'une quelconque des revendications précédentes, comprenant en outre des moyens pour l'identification visuelle de zooplancton ou de poissons mésopélagiques.

9. Système de récolte selon l'une quelconque des revendications précédentes, dans lequel ledit dispositif sous-marin comprend en outre un ou plusieurs éléments d'ajustement de la flottabilité pour régler la flottabilité dudit dispositif sous-marin.

10. Système de récolte selon la revendication 9, dans lequel lesdits un ou plusieurs éléments d'ajustement de la flottabilité sont situés sur une surface externe dudit dispositif sous-marin.

11. Système de récolte selon l'une quelconque des revendications 9 précédentes, dans lequel lesdits un ou plusieurs éléments d'ajustement de la flottabilité sont connectés audit dispositif sous-marin et situés à une distance prédéfinie dudit dispositif sous-marin.

12. Système de récolte selon l'une quelconque des revendications 9-11 précédentes, dans lequel lesdits un ou plusieurs éléments d'ajustement de la flottabilité sont fixés audit cadre protecteur.

13. Système de récolte selon l'une quelconque des revendications précédentes, dans lequel lesdits moyens de pompage sont une ou plusieurs pompes déplaçant par action mécanique ledit fluide contenant du zooplancton ou des poissons mésopélagiques.

14. Système de récolte selon la revendication 13, et dans lequel lesdites une ou plusieurs pompes sont des pompes sous-marines.

15. Système de récolte selon la revendication 4, comprenant en outre des sources de lumière situées au-dessous de ladite ouverture desdites une ou plusieurs entrées, telles que des sources de lumière éclairant la zone au-dessous du dispositif sous-marin pendant son fonctionnement.
